# FASCICULE DE BREVET EUROPEEN

(11) **EP 0 855 375 B1**
(45) Date de publication et mention de la délivrance du brevet: **19.09.2001**
(21) Numéro de dépôt: 98400150.3
(22) Date de dépôt: 26.01.1998
(51) Int. Cl.: C05F 11/00, C05F 11/10

(54) **Utilisation de dérivés d'adénine comme agents favorisant par systémie la migration et la distribution des éléments nutritifs et fertilisants chez la plante**
Verwendung von Adeninderivaten zur systemischen Förderung der Migration und Abgabe von Pflanzennährstoffe
Use of adenine derivatives for systemically enhancing the migration and distribution of nutrients in plants

(30) Priorité: 24.01.1997 FR 9700763
(43) Date de publication de la demande: 29.07.1998
(73) Titulaire: SOCIETE D'ENGRAIS COMPOSES MINERAUX ET AMENDEMENTS (S.E.C.M.A.), F-22260 Pontrieux (FR)
(72) Inventeur: Briand, Xavier, Kermouster, 22740 Lezardrieux (FR)
(74) Mandataire: Hubert, Philippe

(56) Documents cités:
- EP-A- 0 538 091
- WO-A-90/02719
- US-A- 4 581 056
- US-A- 5 372 627

## Description

La présente invention a essentiellement pour objet une nouvelle utilisation de dérivés naturels ou synthétiques d'adénine ainsi que d'extraits d'algues riches en de tels dérivés.

Plus précisément, la présente invention concerne l'utilisation de dérivés naturels ou synthétiques d'adénine ou d'extraits d'algues riches en de tels dérivés comme agents à usage agricole destinés à favoriser par systémie la migration et la distribution des éléments nutritifs et fertilisants et en particulier des oligo-éléments, aminés ou non, chez la plante.

L'invention trouve principalement application dans la préparation de nouvelles compositions fertilisantes associant de tels dérivés d'adénine avec des éléments fertilisants traditionnellement utilisés à base d'azote, de phosphore, de potassium, d'oligo-éléments et d'acides aminés.

On sait que les engrais foliaires utilisent classiquement des éléments fertilisants et en particulier des sources d'azote, de phosphore et de potassium, ainsi que des oligo-éléments et des acides aminés dans le but de résoudre les problèmes de sous-fertilisation et de prévenir les carences en oligo-éléments chez le végétal.

Pour favoriser l'assimilation de ces oligo-éléments par les plantes, ces derniers sont généralement présents sous forme de complexes avec des acides aminés.

On sait, par ailleurs, que les algues, en raison de leurs propriétés variées, ont été proposées pour de nombreuses applications dans le domaine agricole.

Le document WO-93/06730 décrit, par exemple, l'utilisation d'extraits d'algues brunes, obtenus par hydrolyse basique, pour la préparation d'engrais accélérant la croissance des plantes, en augmentant le potentiel énergétique des semences et des plantes.

L'effet décrit dans ce document antérieur est un effet de stimulation de la production d'énergie et de la biosynthèse de la plante, par transformation d'éléments nutritifs déjà présents sur les sites de transformation. De plus, ce document ne fournit aucune indication quant à la nature chimique des substances actives issues de l'extraction.

Des dérivés d'adénine sont également cités dans le document WO 90/02719 comme agents susceptibles de favoriser la biosynthèse dans des compositions complexes à base de sucres ou molasses, d'acides aminés, d'oligo-éléments et de vitamines.

On sait par ailleurs que les cytokinines sont des substances naturelles ou synthétiques qui stimulent la cytokinèse, c'est-à-dire la division cellulaire, et qui interviennent également dans un certain nombre de processus physiologiques.

Ces substances sont présentes dans tous les tissus végétaux.

On connaît aujourd'hui une centaine de composés cytokiniques de synthèse dérivés d'adénine, de pyridine, de pyrimidine et d'imidazole.

De telles substances ont été préconisées dans le domaine agricole, mais généralement pour des cultures spécialisées comme par exemple la vigne, et toujours pour leurs propriétés de stimulation de la division cellulaire.

Dans le brevet US 5.372.627 qui décrit principalement des compositions fertilisantes à base d'esters de phosphate, il est fait mention de l'utilisation de la benzyladénine comme agent destiné à favoriser la mobilité des composés phosphorés dans le phloème.

Enfin, dans le brevet US 4.581.056, on a proposé d'utiliser des cytokinines de nature variée en association avec des macro-éléments ou des micro-éléments dans une composition aqueuse de pH compris entre 4,5 et 8,5 dans le but de retarder la sénescence des cultures, et donc d'augmenter le rendement.

Dans ce document antérieur, la capacité accrue d'assimilation des éléments nutritifs par la plante suppose une interaction directe entre la composition utilisée et le fertilisant au niveau de la zone d'application, et résulte non pas d'une meilleure migration et distribution des éléments nutritifs, mais de l'inhibition par la composition utilisée des éléments déclenchant la sénescence de la plante.

Il a été découvert, et ceci constitue le fondement de la présente invention, que les dérivés naturels ou synthétiques d'adénine favorisent par une action systémique, la migration et la distribution :
- soit des éléments nutritifs normalement présents dans les réserves du sol, lorsque ces dérivés sont utilisés seuls,
- soit des éléments nutritifs présents dans des engrais foliaires et en particulier les éléments azotés et les oligo-éléments , lorsque ces dérivés sont utilisés en association avec de tels engrais.

Dans le cadre de la présente demande, on entend désigner par l'expression "élément nutritif' tout élément naturellement présent dans le sol et dont la plante a besoin pour sa croissance ou pour le développement de ses différents stades végétatifs et reproductifs (floraison, fructification).Cet élément nutritif peut être dans sa forme brute, généralement présente dans le xylème, ou dans une forme élaborée au sein de la plante, généralement présente dans le phloème.

Par exemple, un élément tel qu'un nitrate constituant une source d'azote, sous forme brute, va être transformé dans la plante en un élément élaboré notamment en un acide aminé. Ce nitrate, comme l'acide aminé élaboré à partir de celui-ci, constituent donc des éléments nutritifs au sens de l'invention.

Dans le cadre de la présente demande, on entend désigner par l'expression "élément fertilisant" tout élément nutritif apporté à la plante de façon exogène.

Par l'expression "oligo-élément", on entend désigner tout élément nutritif à l'exclusion des éléments nutritifs dits "primaires" que sont l'azote, le phosphore et le potassium.

Ainsi, l'expression "oligo-éléments" couvre aussi bien les oligo-éléments traditionnels comme par exemple le fer, le magnésium, le zinc, le cuivre, le molybdène ou le bore que les éléments nutritifs, dits secondaires, comme notamment le calcium, le magnésium ou le soufre.

Il a été montré, de façon tout à fait inattendue, que les dérivés d'adénine, et notamment l'isopentényladénine et son riboside, l'isopentényladénosine, favorisent, par une action systémique, c'est-à-dire indépendante du lieu d'application, la migration et la distribution des éléments nutritifs et fertilisants sous forme brute ou non transformée, vers les zones de transformation de la plante.

Il a été montré, de façon tout à fait inattendue que les dérivés d'adénine, et notamment l'isopentényladénine et son riboside, l'isopentényladénosine, favorisent, par une action systémique, la migration et la distribution des éléments nutritifs et fertilisants azotés et/ou riches en oligo-éléments, que ces éléments soient sous forme brute ou sous forme élaborée, vers les sites de la plante nécessitant ces éléments pour leur croissance ou leur développement.

Il a en particulier été montré de façon surprenante que les dérivés d'adénine, associés à des engrais foliaires contenant des oligo-éléments complexés par des acides aminés, favorisent la pénétration et la migration desdits acides aminés ainsi que desdits oligo-éléments complexés par ces acides aminés, notamment vers les zones de croissance, les sites d'accumulation des réserves ou les fruits en développement.

Par conséquent, ces dérivés d'adénine présentent un intérêt remarquable sous forme de composition foliaire en complément d'engrais liquides notamment dans le but de prévenir ou de traiter les problèmes de sous-fertilisation ou de carence en oligo-éléments, et dans le but de permettre une nutrition par voie systémique de la plante.

Par l'expression "plante", on entend désigner ici la plante dans son ensemble, incluant son appareil racinaire, son appareil végétatif et son appareil reproducteur (fleur, fruit et graines).

L'originalité de la présente invention réside donc dans la fourniture d'un moyen permettant une nutrition par voie systémique, et donc plus efficace de la plante, par comparaison aux engrais traditionnellement utilisés qui ne permettent d'obtenir qu'une nutrition essentiellement locale de la plante.

Ainsi, selon un premier aspect, la présente invention a pour objet l'utilisation de dérivés naturels ou synthétiques d'adénine (ou aminopurine) ou d'extraits d'algues riches en de tels dérivés comme agents foliaires destinés à favoriser par systémie la migration et la distribution des éléments nutritifs ou fertilisants azotés et/ou riches en oligo-éléments ainsi que des éléments nutritifs ou fertilisants sous forme brute, chez la plante.

Les dérivés d'adénine susceptibles d'être utilisés dans le cadre de la présente invention sont plus particulièrement les dérivés substitués sur l'atome d'azote en position 6 de l'adénine et éventuellement sur le carbone en position 2 et/ou sur l'atome d'azote en position 9 de l'adénine, notamment par un groupement D-ribofuranosyl.

Ces dérivés d'adénine peuvent être naturels ou synthétiques ou présents au sein d'extraits d'algues enrichis en de tels dérivés.

A titre d'exemples de dérivés naturels d'adénine susceptibles d'être utilisés dans le cadre de la présente invention, on citera notamment la transzéatine, la cis-zéatine riboside, la dihydrozéatine, l'isopentényladénine et leurs ribosides.

A titre de dérivés synthétiques d'adénine susceptibles d'être utilisés dans le cadre de la présente invention, on citera notamment l'isopentényladénine de synthèse, la N⁶-furfuryladénine et la N⁶-benzyladénine.

Des extraits d'algues enrichis en dérivés d'adénine utiles dans le cadre de la présente invention peuvent être obtenus à partir de certaines espèces d'algues par un procédé comportant généralement les étapes suivantes : lavage, broyage, extraction (séparation solide-liquide), et éventuellement concentration.

Les conditions d'extraction et la nature des algues seront choisies de telle façon que l'extrait obtenu présente l'activité souhaitée, par comparaison à des substances pures de référence.

Ces choix pourront donc être facilement réalisés par l'homme de métier notamment en tenant compte des indications suivantes.

Les algues présentant une activité significative, par comparaison à des substances pures, sont de préférence des algues brunes choisies parmi Ascophyllum nodosum, Fucus vésiculosus, Fucus serratus.

Les meilleurs résultats ont été obtenus à partir de Fucus serratus.

On a de même déterminé que pour enrichir au mieux l'extrait d'algue en dérivé d'adénine actif, il convient de réaliser l'extraction en milieu aqueux acide. Les meilleurs résultats ont été obtenus en opérant une extraction à une température d'environ 90 à 110°C pendant 30 min à 1 h sous agitation, poursuivie à température ambiante pendant une période d'environ 24 à 48 h.

L'extrait obtenu peut être plus ou moins concentré selon l'utilisation envisagée. Une déshydratation totale de cet extrait permettant une présentation sous forme pulvérulente peut être obtenue, par exemple, par atomisation.

Selon une caractéristique particulière de l'invention, les dérivés d'adénine précités ou les extraits d'algues enrichis en de tels dérivés sont utilisés en une quantité permettant l'obtention d'une activité comprise entre 500 et 5 000 exprimée en microgrammes équivalents BAP (6-benzyladénine) mesurée par le test Amaranthe.

Ce test qui a été décrit par Biddington et Thomas (Biddington N.I and Thomas T.H. 1973 Planta : 111 183-186) est fondé sur la capacité des dérivés d'adénine à induire la synthèse d'amaranthine (pigment rouge) chez la plante Amaranthus candatus.

L'activité des produits testés est ainsi mesurée par la quantité d'amaranthine synthétisée exprimée par la différence de densité optique entre l'échantillon de plante non traitée et l'échantillon de plante traitée.

L'activité est exprimée par comparaison à l'activité d'un dérivé de synthèse connu la 6-benzyladénine et désignée ci-après BAP.

Dans le cadre de la présente invention, on préférera tout particulièrement utiliser des extraits d'algues enrichis en isopentényladénine, ou en son riboside l'isopentényladénosine, qui présentent une activité remarquable très supérieure à celle d'autres dérivés d'adénines.

L'utilisation de dérivés d'adénine conforme à la présente invention s'applique à une très grande variété de plantes.

Parmi celles-ci, on citera en particulier :
- les plantes de grande culture telles que les céréales (blé, maïs) ;
- les protéagineux (pois) ;
- les oléagineux (soja, tournesol) ;
- les plantes prairiales telles qu'en particulier "ray-grass" utiles pour l'alimentation animale ;
- les cultures spécialisées telles qu'en particulier le maraîchage (laitue, tomate, melon) ou l'arboriculture (poire, pomme, nectarine).

La présente invention sera maintenant illustrée par les exemples non limitatifs suivants :

Dans ces exemples, et sauf indication contraire, les pourcentages sont exprimés en poids et la température est la température ambiante.

### Exemple 1 - Procédé de préparation d'un extrait d'algue enrichi en dérivés d'adénine actifs utilisables dans le cadre de l'invention.:

### A/ Optimisation des paramètres d'extraction.

Une étude préalable a été réalisée afin d'optimiser les paramètres d'extraction des dérivés d'adénine utilisables dans le cadre de la présente invention.

On a en particulier recherché l'influence du pH, de la durée et de la température d'extraction pour obtenir, pour une espèce d'algues donnée, l'activité maximale exprimée en microgrammes équivalent B.A.P. par gramme de matière sèche.

Cette étude préalable a permis de montrer que les algues brunes conviennent plus particulièrement dans le cadre de la présente invention, et notamment les algues Ascophyllum nodosum, Fucus vésiculosus et Fucus serratus.

Dans le cas de la variété Fucus serratus qui a conduit aux meilleurs résultats en terme d'activité, l'extraction est réalisée de façon optimale par hydrolyse acide à environ 100°C pendant 60 minutes suivi d'une extraction pendant 24 heures à 15°C.

### B/ Exemple détaillé d'extraction :

Un extrait de Fucus serratus enrichi en isopentényladénine a été obtenu en suivant le protocole expérimental suivant.

### a) Lavage

Des algues fraiches de type Fucus serratus sont soumises à deux lavages successifs dans un bac d'eau afin d'éliminer le sable et les graviers.

Les algues sont ensuite déposées dans des paniers grillagés en inox avant d'être introduites dans les bacs où elles sont recouvertes d'eau.

Une agitation par des buses d'aération permet de maintenir les algues en suspension en favorisant ainsi la décantation des impuretés.

### b) Broyage.

Les algues ainsi lavées sont égouttées puis broyées en morceaux de 1 à 10 mm.

### c) Extraction.

200 kg d'algues sont dispersés dans 800 kg d'eau portée à ébullition dans un réacteur chauffant.

Le pH est ajusté à la valeur 3 par ajout au milieu aqueux d'environ 1 litre d'acide sulfurique.

On ajoute ensuite de l'eau en une quantité telle que le volume total soit de 1000 litres.

Après introduction des algues, la température est ramenée à environ 90-100°C.

L'ensemble est maintenu à cette température pendant une durée d'environ 1 heure (incluant la montée en température).

Au cours des 30 premières minutes, les cellules alguales déjà broyées sont micro-éclatées au moyen d'un homogénéisateur de type ULTRA-CURAX® afin de favoriser l'extraction des molécules riches en dérivés d'adénine.

A l'issue de cette période, le chauffage est arrêté et l'extraction se poursuit alors sous agitation pendant environ 24 heures à 15°C.

### d) Séparation.

La fraction riche en dérivés d'adénine est séparée des débris d'algues par centrifugation (séparation solide-liquide).

L'extrait centrifugé est ensuite filtré soit sur un filtre à terre de diatomées, soit sur un filtre à plateaux, puis à nouveau filtré sur une membrane jusqu'à 1µm.

Le filtrat ainsi obtenu comprend entre 1 et 5% en poids d'extrait sec.

La composition de cet extrait sec est présentée dans le Tableau I ci-après :

**TABLEAU I**

| **ELEMENT** | **TENEUR** |
|---|---|
| Activité cytokinique (selon test biologique amaranthe) µg ep BAP/100 g d'extrait sec | 500 - 5000 |
| Densité | 1,00 - 1,02 |
| pH | 6-7 |
| Matière sèche | 10-50 g/l |

| **Elements fertilisants** | **mg/l** |
|---|---|
| Azote total | 220-1500 |
| Phosphore total | 30-80 |
| Calcium | 100-400 |
| Potassium | 200-4000 |
| Sodium | 900-1600 |
| Magnésium | 150-1000 |
| Soufre | 700-2200 |
| Manganèse | 0,03-0,70 |
| Fer | 2,0-8,0 |
| Cuivre | 0,03-1,3 |
| Bore | 1,5-6,5 |
| Zinc | 0,3-1,3 |
| Molybdène | 0,10-1,70 |
| Iode | 50-100 |
| Cobalt | 0,01-0,50 |

| **Métaux lourds** | |
|---|---|
| Nickel | 0,02 |
| Plomb | ND |
| Cadmium | ND |
| Arsenic minéral | 0,07 |

La qualité bactériologique de l'extrait a été étudiée et les résultats obtenus sont présentés au Tableau II ci-après:

**TABLEAU Il**

| **Germes recherchés (par g)** | **Résultats** |
|---|---|
| Flore aérobie mésophile | <300 |
| Coliformes fécaux | <10 |
| Salmonelle | Absence dans 25 g |

L'extrait ainsi préparé peut être utilisé sous une forme plus ou moins concentrée, la concentration finale étant déterminée en fonction de la teneur recherchée en dérivés actifs dans l'application envisagée, notamment dans une formulation d'engrais liquides.

Ainsi, le filtrat mentionné précédemment peut être concentré, par exemple au moyen d'un évaporateur à flot tombant, de façon à ce que l'extrait sec représente de 10 à 20 % en poids de celui-ci.

Une déshydratation totale peut également être obtenue par exemple par atomisation, lorsque l'on recherche une présentation sous forme pulvérulente.

Pour les présentations liquides, sous forme d'extraits bruts ou concentrés, un conservateur tel que par exemple le chloro-4-méthyl-3-phénolate de sodium peut être introduit à la dose de 0,1 à 0,3%.

De même le pH peut être ajusté à une valeur de 6-7 par ajout d'hydroxyde de potassium.

### C/ Caractérisation des dérivés d'adénine présents au sein de l'extrait d'algue.

### a) Récupération des dérivés d'adénine.

L'extrait aqueux préparé conformément à l'exemple détaillé d'extraction B/ qui précède est évaporé sous vide.

L'extrait sec est remis en suspension dans 100 ml d'une solution d'éthanol à 80 % et le pH descendu à 3,5.

Une colonne contenant une résine échangeuse de cations (Dowex 50 W - X8) est conditionnée en utilisant une solution éthanolique (80 %). Les bulles d'air sont éliminées et la colonne est rincée à l'éthanol.

L'échantillon est passé lentement sur la colonne à un débit de 20 ml/h. Cette opération est suivie d'un lavage avec 100 ml d'une solution éthanolique à 80 %.

Les dérivés d'adénine sont décrochées de la résine en faisant passer 100 ml d'une solution d'hydroxyde d'ammonium (5 N) à travers la colonne. Cette fraction une fois collectée est évaporée sous vide.

### b) Purification des dérivés d'adénine par chromatographie liquide (HPLC)

Les échantillons secs obtenus sur résine échangeuse de cations sont remis en suspension dans 500 µl d'une solution méthanolique à 80 % (qualité HPLC) et filtrés sur un filtre à solvant Millipore de 0,22 µm.

Les analyses HPLC sont réalisées sur un chromatographe VARIAN 5000 équipé d'une colonne semi-préparative Hypersil 5ODS 25 cm x 10 mm.

Un gradient d'élution est utilisé en partant d'un mélange [95 : 5 (v/v)] d'acide acétique (0,2 M) tamponné à un pH de 3,5 avec de la triéthylamine et de méthanol jusqu'à un mélange [50 : 50 (v/v)]de la solution acide acétique tamponnée et de méthanol pendant 90 mn (débit 3 ml/mn).

Quatre-vingt dix fractions de 1 ml sont ainsi collectées.

Les fractions sont séchées et remises en solution dans 100 µl d'une solution méthanolique à 80 % (qualité HPLC). Les échantillons sont ensuite fractionnés sur une colonne HPLC analytique avec le même système tampon à un débit de 1 ml/mn.

### c) Résultats obtenus

La chromatographie analytique ainsi réalisée permet d'identifier deux des pics obtenus comme l'Isopentenyl Adenine (IP) et son riboside l'Isopentenyl Adenosine (IPA).

Cet extrait est particulièrement riche en Isopentényl Adénosine et en Isopentényl Adénine.

### dans le cadre de l'invention

### A- Effet d'un dérivé d'adénine et d'un extrait d'algue enrichi en un dérivé d'adénine sur la migration des acides aminés.

### a) Protocole Expérimental

L'activité de l'extrait riche en Isopentenyl Adénine préparé à l'exemple 1 a été mesurée et comparée à celle d'un témoin (eau déminéralisée) et à celle d'une référence cytokinine, la 6-aminofurfuryl purine.

Une culture de maïs (Zea Mays), variété Rustica Volga conduite en plein champ est utilisée pour mettre en évidence l'effet de l'extrait de l'exemple 1 et de la 6-aminofurfurylpurine sur la migration des Acides Aminés (en l'occurence : la glycine).

Les pulvérisations ont eu lieu sur les végétaux en pied. Les prélèvements ont été effectués 24 heures après.

Plus précisément, les pulvérisations des produits testés se font sur le 1/3 feuille côté Apex à la dose d'environ 2 µl de solution par cm² de feuille selon un niveau de concentration déterminé.

Ainsi, la 6-Aminofurfuryl purine est testée à raison de 0,2 µg/cm². L'extrait de l'exemple 1 est également testé à la concentration de 0,2 µg exprimé en équivalent Benzyl-Amino purine (test biologique Amaranthus).

La glycine N15 utilisée comme marqueur biologique est appliquée immédiatement après les pulvérisations. Une goutte d'une solution aqueuse de glycine N15 (25 g/l) soit l'équivalent de 1 mg N15 est déposée à l'aide d'une baguette de verre sur une surface ronde d'approximativement 4 cm², au premier tiers de la feuille, côté pétiole des feuilles traitées et témoins.

Les prélèvements foliaires (0,3 à 2 g) sont effectués 24 heures après les pulvérisations sur le premier tiers côté apex des feuilles pour la détermination de l'azote total et le pourcentage de N15.

### b - Résultats

Les résultats obtenus sont présentés au Tableau III ci-après.

**TABLEAU III**

| **TRAITEMENT** | **TEMOIN EAU** | **REFERENCE 6-AMINOFURFURYL PURINE** | **EXTRAIT de l'exemple 1** |
|---|---|---|---|
| | | **0,2 µg/cm2** | **0,2 µg eq BAP/cm2** |
| Nombre de répétitions | 4 | 2 | 2 |
| % N15 | 0,3751+/-0,0064 | 0,3834 | 0,5112 |
| Traitement significatif/témoin | - | ∗ | ∗ |
| % migration N/témoin | - | + 2,2 % | 36,3 % |

L'azote représente de 1 à 3% du poids sec de la feuille soit donc l'équivalent de 3 à 60 mg N par prélèvement. L'abondance isotopique naturelle en N 15 est de 0,3663 %. L'ajout de 1 mg N15 par la glycine représente ainsi de 1 à 30 % de l'azote déjà présent dans le prélèvement.

Aucune des feuilles utilisées n'étaient en croissance. On peut donc supposer des flux d'azote relativement limités. Les témoins pulvérisés avec de l'eau font état d'une migration insignifiante du N15.

Le traitement par la 6-aminofurfuryl purine entraîne une augmentation de 2,2 % du taux de migration par rapport au témoin eau.

Le traitement par l'extrait de l'exemple 1 à la concentration de 0,2 µg eq BAP/ cm² provoque une très forte augmentation du composé azoté (+ 36,3%) vers la zone foliaire traitée.

### B- Effet d'un dérivé d'adénine et d'un extrait d'algue enrichi en un dérivé d'adénine sur la migration des oligo-éléments.

### a) Protocole expérimental

On a étudié l'effet de l'extrait de l'exemple 1 sur la migration des oligo-éléments manganèse et zinc apportés par un engrais foliaire, et comparé cet effet à celui d'une cytokinine de référence la Benzyladénine (BAP) et d'un témoin eau.

L'expérimentation est conduite en pots sur du maïs variété LG 2208. La culture est réalisée dans une chambre de culturue climatique. Les semis se font sur support vermiculite enrichi avec le milieu nutritif de Hoagland, à raison d'un pied par pot. L'essai comprend 4 modalités à 3 répétitions.

Les pulvérisations des produits testés (0,2 µg eq BAP/cm²) ou eau se font au stade 6-7 feuilles sur le tiers supérieur de la feuille. L'engrais foliaire titre respectivement 4,9 % en manganèse et 3,6 % en zinc. Cette solution nutritive est appliquée sur les 2/3 inférieurs de la feuille (côté pétiole) immédiatement après les pulvérisations.

Les dépôts de manganèse et de zinc représentent ainsi respectivement 882 µg et 648 µg par feuille. Les prélèvements foliaires sont effectués 60 heures après les traitements sur le tiers supérieur des feuilles afin d'évaluer la migration des éléments en manganèse et en zinc. Le taux de migration est calculé par rapport à la quantité d'oligo-éléments initialement déposée, déduction faite des teneurs relevées pour les témoins non traités.

### b) Résultats.

Les résultats obtenus sont présentés au Tableau IV ci-après:

**TABLEAU IV**

| **Traitement foliaire** | | **Manganèse** | | | **Zinc** | | |
|---|---|---|---|---|---|---|---|
| Côté apex | Côté pétiole | µg/feuille (apex ) | Migration | | µg/feuille (apex) | Migration | |
| | | | %quantité initiale | Variation/t émoin | | %quantité initiale | Variation/t émoin |
| Témoin eau | Eau | 11.8 | - | - | 3.3 | - | |
| Témoin eau | MnZn | 88.8 | 8.73 | 100 | 52.3 | 7.56 | 100 |
| Référence BAP | MnZn | 106.8 | 10,77 | 125 | 57.5 | 8,36 | 110 |
| Extrait de exemple 1 | MnZn | 123,9 | 12,71 | 145 | 57,0 | 8,29 | 111 |

Ces résultats montrent que l'application foliaire de la solution nutritive permet d'obtenir des concentrations importantes en éléments sur le côté apex de la feuille. Les teneurs passent ainsi de 11,8 à 88,8 µg par feuille pour le manganèse et de 3,3 à 52,3 µg par feuille pour le zinc. Cet enrichissement correspond à une migration de 7,6 % et 8,7 % de la quantité initialement déposée en manganèse et en zinc.

L'introduction de l'extrait de l'exemple 1 dans l'engrais foliaire favorise nettement le transport des oligoélements à travers la feuille. Le taux de migration atteint alors 12,7 % pour le manganèse et 8,3 % pour le zinc, correspondant respectivement à une augmentation de 45% et de 11% de la quantité d'oligo-éléments transportée.

Des résultats similaires mais de moindre ampleur sont obtenus avec la Benzyladénine.

### C- Effet d'un dérivé d'adénine et d'un extrait d'algue enrichi en un dérivé d'adénine sur la migration d'un oligo-élément aminé.

### a) Protocole expérimental

On a étudié l'effet de l'extrait de l'exemple 1 par rapport à un témoin eau, sur le transport de l'oligo-élément manganèse soit sous forme minérale (nitrate de manganèse) soit sous forme complexée avec un acide aminé, en l'occurrence l'acide aspartique.

Une culture de maïs, variété DUNIA (Rustica) conduite en plein champs, est utilisée pour mettre en évidence l'effet de l'extrait de l'exemple 1 sur la migration d'un oligo-élément aminé.

Les pulvérisations sont réalisées au stade début de floraison mâle.

La solution de manganèse titre 17,3 g/l. La solution d'oligo-élément aminé titre 17,3 g/l de manganèse complexé par de l'acide aspartique, à raison de 61,4 g/l. Le pH des différentes solutions est ramené à une valeur de 6,0 - 6,2 correspondant à l'optimum de stabilité pour le complexe aspartate de manganèse.

Les pulvérisations de l'extrait de l'exemple 1 ou de l'eau se font sur le 1/3 de la feuille, côté apex. Les solutions de nitrate de manganèse ou d'aspartate de manganèse sont appliquées sous forme de pulvérisation localisée au premier tiers de la feuille, côté pétiole que ce soit pour le traitement avec l'extrait de l'exemple 1 ou avec le témoin eau.

Les prélèvements pour l'analyse du manganèse et de l'azote sont effectués après 24 et 72 heures sur le tiers supérieur de la feuille apex traitée ou non avec l'extrait de l'exemple 1.

Chaque traitement comprend 4 répétitions contre 6 pour le témoin.

Chaque répétition correspond à 3 feuilles. Les analyses portent donc sur un total de 12 feuilles pour chacun des traitements et de 18 feuilles pour le témoin.

### b) - Résultats

Les résultats obtenus sont présentés au Tableau V ci-après :

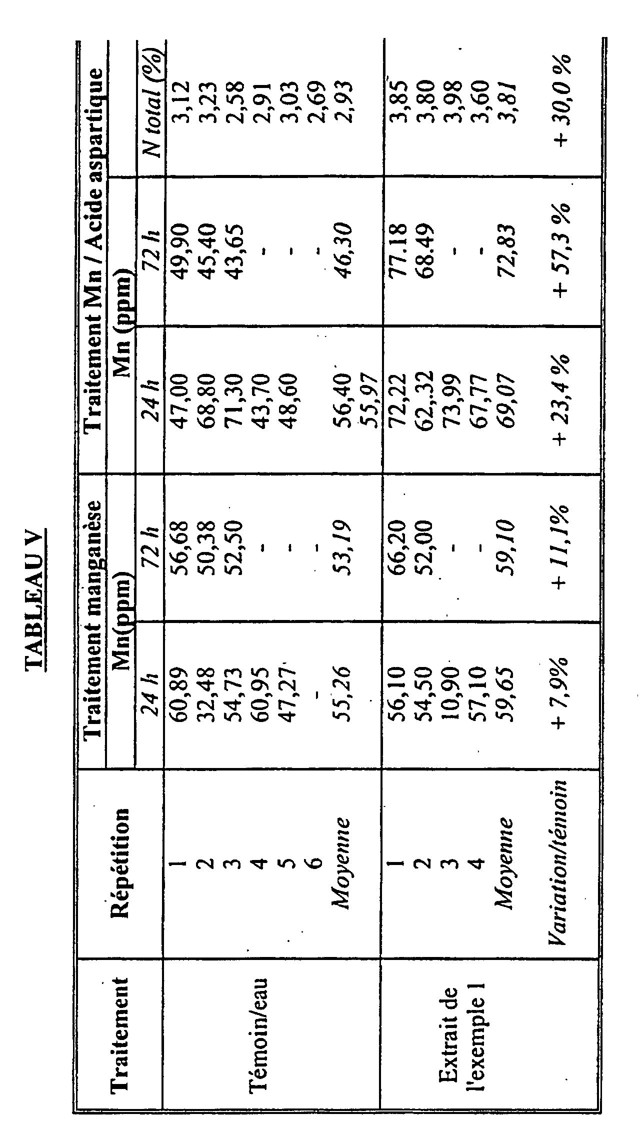

Le premier élément de comparaison concerne la migration de l'élément manganèse sous sa forme minérale, en présence ou non d'un traitement avec l'extrait de l'exemple 1. On retrouve ainsi 72 heures après le traitement de l'exemple 1, comme dans l'expérimentation précédente, une augmentation de la teneur foliaire en manganèse de plus de 11% par rapport au témoin eau / nitrate de manganèse.

Le second élément de comparaison concerne la migration de l'élément manganèse sous sa forme aspartate, en présence ou non d'un traitement avec l'extrait de l'exemple 1. Dans ce cas, l'effet du traitement est encore plus remarquable avec une augmentation du taux de migration foliaire du manganèse de 57% par rapport au témoin eau/aspartate de manganèse.

Un effet semblable est observée sur la migration de l'azote.

Le traitement avec l'extrait de l'exemple 1 améliore de 30% la migration de l'azote.

Des résultats similaires mais de même ampleur sont obtenus avec la Benzylaminopurine.

### D- Effet d'un extrait d'algue enrichi en un dérivé d'adénine sur la migration d'éléments nutritifs non élaborés ou non transformés vers les zones de transformation de la plante.

### a) Protocole expérimental

L'activité de l'extrait préparé à l'Exemple 1 appliqué en foliaire, a été dans un premier temps, mesurée et comparée à celle d'un Témoin (eau distillée).

Dans un second temps, un engrais foliaire contenant du Nitrate de Manganèse et du Nitrate de Cuivre a été testé en présence ou non de l'extrait 1.

Une culture de blé dur de printemps, conduite en pots, est utilisée pour mettre en évidence l'effet de l'extrait de l'Exemple 1 sur la migration des éléments nutritifs NPK présents dans le sol ou des éléments fertilisants NPK apportés en foliaire.

Au sol, l'apport est effectué avant le semis à la dose de 14 mg éq. BAP/ha.

En foliaire, deux concentrations sont testées : C1 (5,4 mg éq. BAP/ha) et C2 (13 mg éq. BAP/ha).

L'extrait est pulvérisé dès le stade début montaison.

Les plants de blé sont coupés au stade épaison (début de sortie des étamines). Les poids bruts sont déterminés. La partie basse des tiges est pressée afin de récupérer le jus.

L'analyse de l'azote du phosphore et du potassium est réalisée sur ce jus et les résultats exprimés en mg/ml de sève.

### b) Résultats

Comme le montrent les résultats représentés au Tableau Vbis, les traitements avec l'extrait de l'exemple 1 diffèrent significativement du témoin, au seuil de 80%. On observe dans tous les cas une amélioration de l'absorption entre 10 et 50% pour l'azote, entre 10 et 22% pour le phosphore et entre 4 et 12% pour la potasse.

**TABLEAU Vbis**

| TRAITEMENT | POIDS BRUT sur la base du témoin = 100 | AZOTE mg N/l sève∗ | P (P₂O₅) mg N/l sève ∗ | K (K₂O) mg/l sève ∗ |
|---|---|---|---|---|
| TEMOIN | 100 | 100 | 100 | 100 |
| Extrait 1 C1 | 100 | 110 | 118 | 104 |
| C2 | 103 | 154 | 110 | 109 |
| MnCu | 42 | 76 | 57 | 52 |
| MnCu + Extrait 1 (C2) | 101 | 128 | 122 | 112 |

| | | | | |
|---|---|---|---|---|
| ∗ Teneur corrigée du poids brut (base 100 pris pour le poids brut de chaque traitement). | | | | |

### EXEMPLE 3 : Mise en évidence des effets d'un dérivé d'adénine ou d'un extrait d'algues riche en dérivés d'adénine sur les productions végétales

### A. Effet de l'extrait de l'exemple 1 sur une culture de maïs

### a) Protocole expérimental

L'essai est réalisé dans la région sud-ouest de la France, sur le site de Bergerac. Le sol est de type sablo argilo-limoneux avec une teneur en matière organique de 1,44 et un pH de 6,9.

Sur ces essais, le maïs, variété Sabrina, est implanté à haute densité et l'irrigation conduite à son optimum.

L'extrait de l'exemple 1 est appliqué en pulvérisation foliaire en végétation en deux doses. (C1 =3 mg/ha; C2 = 30 mg/ha).

L'action de l'extrait de l'exemple 1 est étudiée à la fois en situation optimale (N = 180 U) et en situation pénalisante en absence de fertilisation azotée.

Le dispositif expérimental comprend des blocs à 4 répétitions.

Chaque parcelle élémentaire est constituée de 6 rangs de 20 m ou de 6 rangs de 12 m, avec récolte des 2 rangs centraux. Pour les parcelles bénéficiant d'une fertilisation azotée, l'apport se fait sous forme d'urée au moment du labour (60 U ) et au stade 8 feuilles (120 U).

Les traitements foliaires sont appliqués environ 1 mois après les semis au stade 5/6 feuilles.

Les contrôles effectués sur les lots témoins et traités se font sur les éléments de rendement (15%), de poids de mille grains (15%) et rendement grains/épis.

On a présenté au Tableau VI ci-après les caractéristiques du sol.

**TABLEAU VI**

| **CARACTERISTIQUES** | **TENEURS** |
|---|---|
| Texture | |
| Argile | 14,6 % |
| Limon | 27,1 % |
| Sables | 58,7 % |
| pH eau | 6,9 |
| Matières organiques | 1,44 % |
| Phosphore (P₂O₅) | 602 mg / kg |
| Potassium (K₂O) | 376 mg / kg |
| Calcium (CaO) | 1775 mg / kg |
| Magnésium (MgO) | 148 mg/ kg |
| Zinc EDTA | 6,18 mg / kg |

### b - Résultats

Les résultats obtenus sont présentés au Tableau VII ci-après :

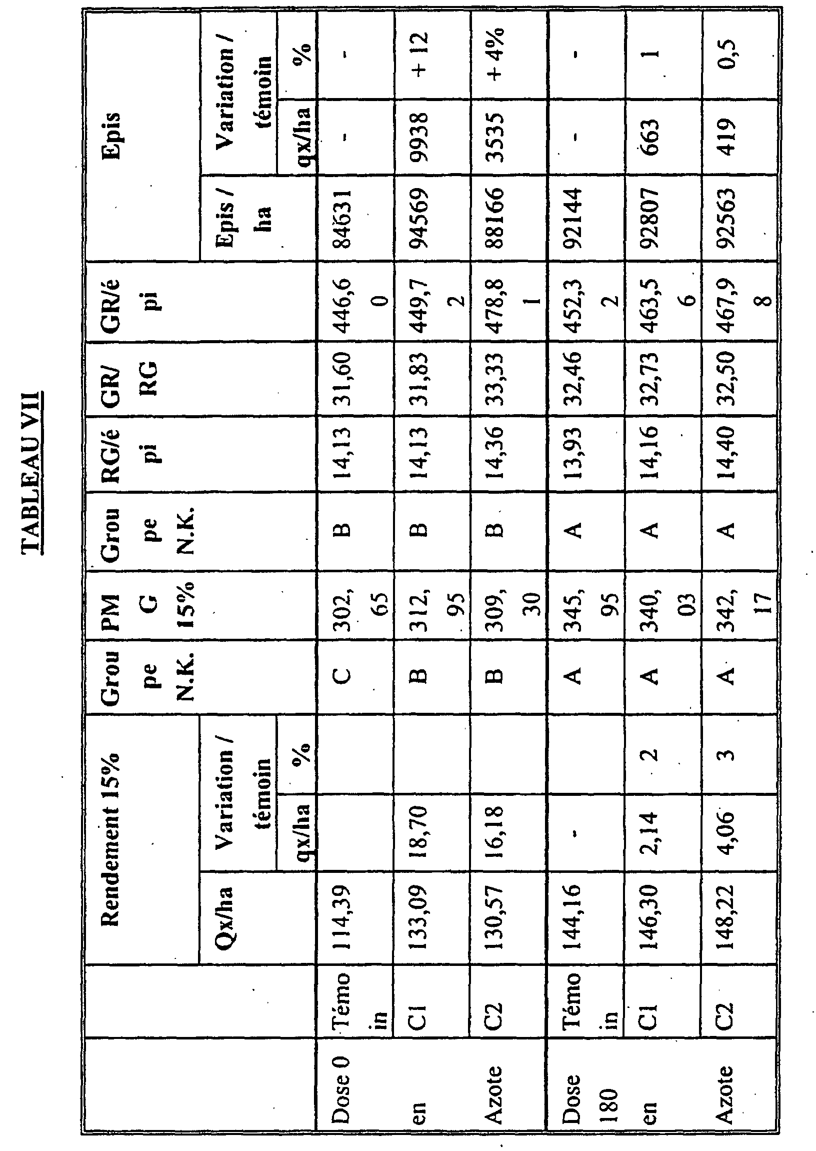

L'extrait de l'exemple 1 permet une amélioration des rendements quelque soit la modalité.

Dans le cas de l'apport à 180 U, le rendement passe de 144,16 qx / ha (quintaux par hectare) pour le témoin à 148,22 qx/ha pour l'extrait de l'exemple 1.

Cet extrait permet ainsi d'améliorer le rendement de plus de 4 qx / ha.

Une situation plus pénalisante en azote favorise l'expression de l'extrait de l'exemple 1 en faveur du rendement. Le différentiel devient alors important avec un rendement qui passe de 114,39 qx/ha pour le témoin à 133,09 pour l'extrait de l'exemple 1 (C1) soit un gain de 18,7 qx/ha. Ce gain correspond ainsi à une progression de plus de 16% du rendement. Les deux concentrations répondent sensiblement de la même façon.

Par ailleurs, cet écart de rendement n'est pas expliqué par le poids de mille grains (PMG) ni par les autres composants mesurés. L'extrait de l'exemple 1 agit en fait sur le nombre d'épis/ha avec près de 10 000 épis supplémentaires à l'hectare.

L'extrait de l'exemple 1 permet également de réduire les effets dépressifs d'une situation pénalisante en azote. L'absence de fertilisation entraîne une chute du rendement de 30 qx / ha entre les témoins alors qu'elle n'est que de 10 qx entre le maïs traité avec l'extrait de l'exemple 1 (absence de fertilisation azotée) et le témoin (180 U N).

### B. Effet de l'extrait de l'exemple 1 associé à un engrais foliaire N Mn Cu sur une culture de blé.

### a)- Protocole expérimental

L'expérimentation est conduite sur une culture de blé située en Artois (France).

L'action de l'extrait de l'exemple 1 associé à un engrais foliaire N - Mn - Cu dosant respectivement 3% en azote, 4,5 % en manganèse et 3 % en cuivre, est comparée à celle d'un témoin. L'extrait de l'exemple 1 et l'engrais foliaire appliqués seuls sont utilisés comme références.

Le dispositif expérimental comprend 4 modalités à 4 répétitions.

Les traitements sont appliqués au stade fin de tallage à raison de 2,5 l/ha pour un volume de dilution de 150 1 / ha.

L'activité de l'extrait de l'exemple 1 apportée à l'hectare est de 0,32 mg eq BAP/ha.

Des prélèvements à raison de 25 plants par parcelle sont réalisés 12 jours après le traitement sur le développement végétatif du blé. Ce développement est exprimé en poids frais.

Le rendement est déterminé en fin de culture.

### b) - Résultats

Les résultats obtenus sont présentés au Tableau VIII ci-après.

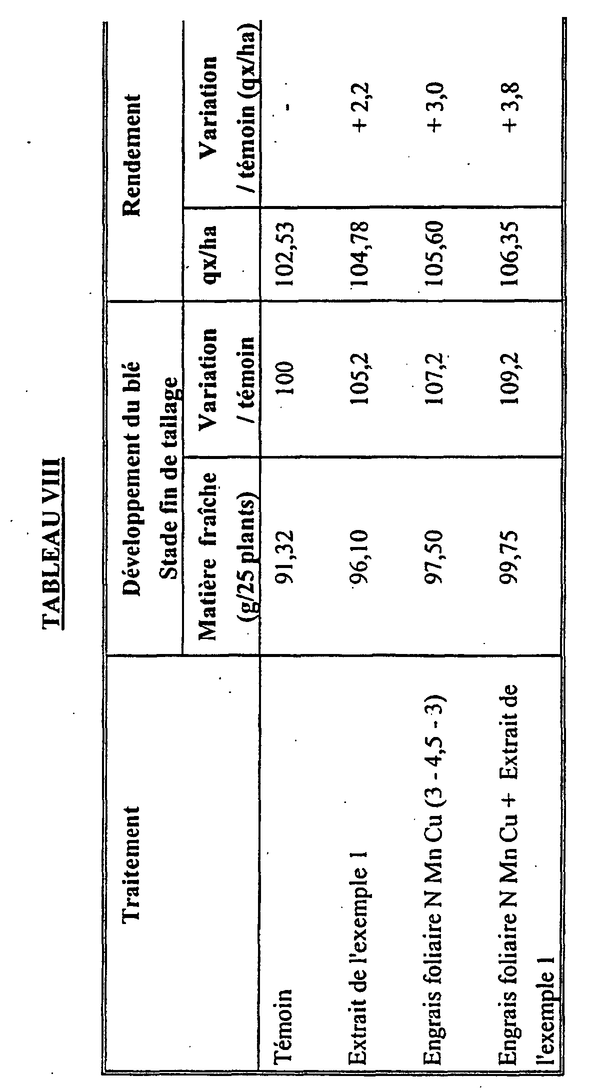

L'extrait de l'exemple 1 et l'engrais N Mn Cu favorisent tous deux la croissance du blé.

Au stade fin de tallage, le développement des plantes traitées, exprimé en matière fraîche, est supérieur par comparaison aux plantes témoins de 5,2 % pour l'extrait de l'exemple 1 et 7,2 % pour l'engrais N Mn Cu.

On retrouve un effet presque cumulatif lorsque l'engrais est associé avec l'extrait de l'exemple 1 avec un gain de matière fraîche de 9,2 % par rapport au témoin.

Cet effet sur l'implantation de la culture, se retrouve à la récolte avec des gains de rendement de 2,2 qx/ha pour l'extrait de l'exemple 1 et de 3,0 qx/ha pour l'engrais lorsqu'ils sont appliqués séparément.

La formule foliaire N Mn Cu associée à l'extrait de l'exemple 1 donne un rendement de 106,35 qx/ha contre 102,53 qx/ha pour le témoin soit un gain de 3,8 qx/ha.

### C/ Effet de l'Extrait de l'exemple 1 associé à un encrais foliaire N P Mg sur une culture de blé

### a) - Protocole Expérimental

L'expérimentation est conduite sur une culture de blé située en Artois (France).

L'action de l'extrait de l'exemple 1 associé à un engrais foliaire N P Mg dosant 3% en azote, 30 % en phosphore (P₂O₅) et 4,3 % en magnésium (MgO) est comparée à celle d'un témoin.

L'extrait de l'exemple 1 et l'engrais foliaire appliqués seuls sont également utilisés comme références. Le dispositif expérimental comprend 4 modalités à 4 répétitions.

Les traitements sont appliqués au stade tallage à raison de 2 1/ ha pour un volume de dilution de 150 1 / ha.

L'activité de l'extrait de l'exemple 1 apportée à l'hectare est de 0,1 mg mg eq BAP/ha.

Des prélèvements à raison de 25 plants par parcelle sont réalisés 12 jours après le traitement afin d'évaluer l'effet des traitements sur le développement végétatif du blé.

Ce développement est exprimé en poids frais.

### b) - Résultats

Les résultats obtenus sont présentés au Tableau IX ci-après.

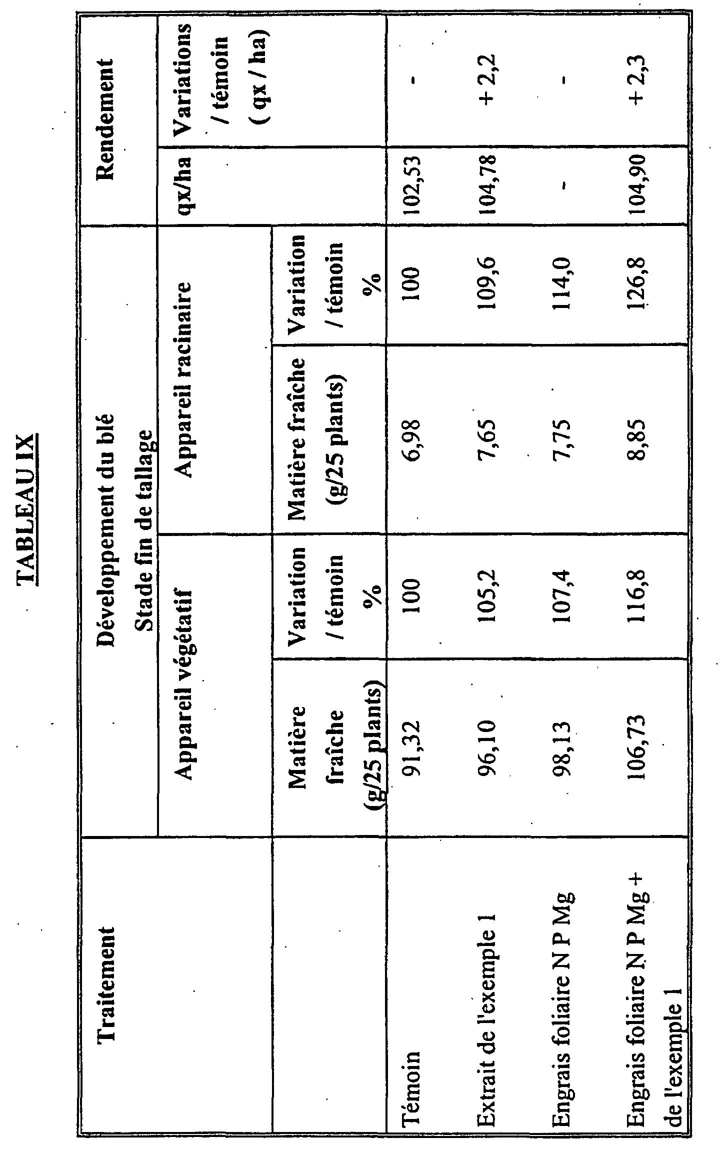

L'extrait de l'exemple 1 tout comme l'engrais N P Mg présentent une action favorable sur le développement végétatif de la culture avec un gain de matière fraîche par rapport au témoin, de plus de 5,2 % et 7,4 % respectivement.

On observe un effet de synergie entre l'engrais et l'extrait de l'exemple 1 puisque leur association permet un accroissement de plus de 16,8 % de la matière fraîche.

L'effet sur le développement de la culture s 'exprime également au moment de la récolte en terme de rendement même si les différences observées sont amenuisées entre les traitements.

Les rendements atteignent 102,53 qx/ha pour le témoin contre respectivement 104,78 qx/ha et 104,90 qx/ha pour l'extrait de l'exemple 1 et l'engrais enrichi par l'extrait de l'exemple 1.

Quelque soit le traitement, celui ci permet un gain supérieur de 2 qx / ha par rapport au témoin.

### D/ Effet de l'extrait de l'exemple 1 sur une culture de pois (Variété Solara)

### a) - Protocole Expérimental

On a étudié l'action de l'extrait de l'exemple 1 est étudiée sur une culture de pois, variété Solara.

L'expérimentation est conduite sur une exploitation expérimentale du Nord de la France.

L'essai comprend 3 modalités à 4 répétitions.

Deux traitements foliaires avec l'extrait de l'exemple 1 appliqués au stade bouton floral, aux doses de C1= 1 mg et C2= 0,2 mg eq BAP/ha sont réalisés par comparaison à un témoin.

La surface de chaque parcelle élémentaire est de 54 m².

Aucun apport en azote n'est réalisé en cours de culture. La récolte est assurée par une moissonneuse batteuse.

### b) - Résultats

Les résultats obtenus sont présentés au Tableau X ci-après.

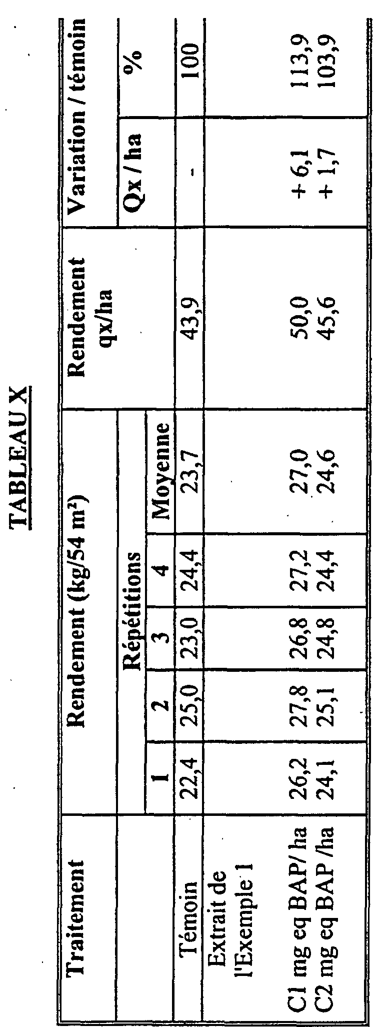

En cours de culture, de la levée jusqu'au stade floraison, aucune différence visuelle n'a été relevée entre les traitements sur le développement et sur la vigueur des plantes.

Par contre, en fin de végétation, le traitement avec l'extrait de l'exemple 1 (1 mg eq BAP / ha) se différencie visuellement des autres traitements jusqu'à la récolte par une coloration nettement plus verte des parcelles.

Ce traitement appliqué au stade bouton floral permet, dans cet essai, de prolonger la période d'activité photosynthétique. Ce retard de maturation des gousses se traduit par une amélioration du remplissage et un gain de rendement de 14 % soit 50 qx/ ha contre 43,9 qx / ha pour le témoin.

### E/ Effet de l'extrait de l'exemple 1 sur une culture de poiriers

### a1) Protocole d'application

L'essai est réalisé dans un verger de poiriers de la variété Williams, implanté dans les alluvions calcaires récentes du Rhône(France).

Il est conduit en haie fruitière. L'écartement des arbres est de 3,5 x 1 m correspondant à une densité de près de 3 000 arbres / ha.

L'extrait de l'exemple 1 (à 1%) est appliqué sous forme de pulvérisation comparativement à un témoin.

Les volumes pulvérisés sur les 2 faces des arbres, à raison de 3 litres par arbre, sont appliqués au début du stade floraison F. A cette période, le taux de fleurs ouvertes est estimé supérieur à 3%.

### a2) Contrôle des arbres

Le traitement avec l'extrait de l'exemple 1 est réalisé sur 4 parcelles élémentaires. Chaque parcelle élémentaire correspond à un rang de 4 arbres orientés est-ouest. Le témoin est constitué quant à lui d'un rang de 5 arbres.

En cours de végétation, un contrôle visuel de l'aspect du feuillage est effectué.

Quatre paramètres sont étudiés.

### Rendement en fruits

La récolte des poires porte sur 4 arbres par parcelle élémentaire soit 16 arbres au total pour le traitement. L'arbre de bordure situé entre 2 traitements n'est pas pris en compte.

### Poids moyen d'un fruit

Afin de juger de l'effet éventuel des pulvérisations sur le poids moyen d'un fruit, c'est-à-dire sur le calibre de la poire, 100 fruits par répétition des 4 traitements ont été pesés.

### Contrôle fermeté des fruits

La fermeté du fruit dépend entre autre de son degré de maturité. Elle est appréciée par un embout de 0,5 cm² et exprimée en kg. Les déterminations sont réalisées sur 20 fruits par répétition soit 80 fruits par traitement.

### Contrôle de la nutrition des arbres

L'aspect nutritionnel en azote, en phosphore et en potassium est apprécié sur des prélèvements de feuilles et sur les fruits au moment de la récolte.

### b) Résultats

Les résultats qui ont été obtenus sont présentés au Tableau XI et XII ci-après.

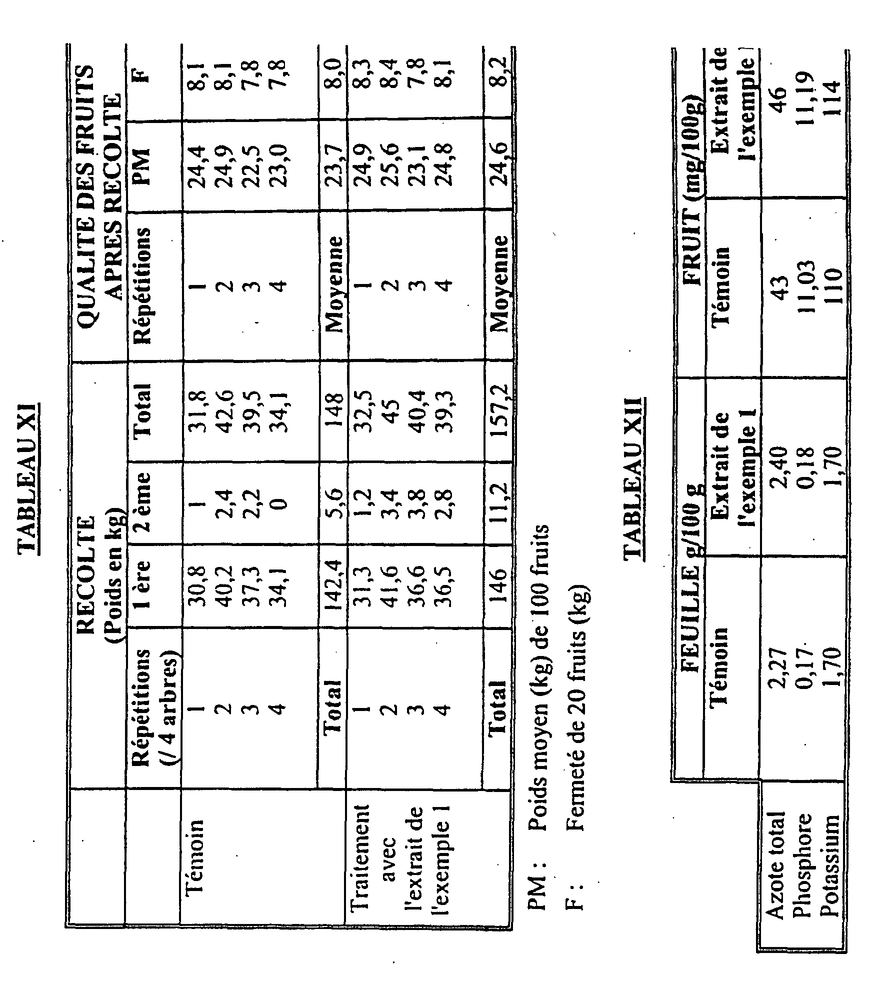

En cours de végétation, aucune différence de végétation ni d'anomalies particulières n'ont été mises en évidences entre le traitement témoin et le traitement avec l'extrait de l'exemple 1.

Malgré l'existence d'une certaine hétérogénéité des arbres, une tendance en faveur du traitement de l'extrait de l'exemple 1 se dégage lorsqu'on compare ses 4 résultats individuels à ceux des 4 parcelles témoins.

Au total, sur 16 arbres, la récolte atteint 148,0 kg pour le témoin contre 157,2 kg avec le traitement avec l'extrait de l'exemple 1.

Si on raisonne sur une plantation de 3 000 arbres / ha, le témoin produirait de l'ordre de 27,7 T / ha contre 29,5 T avec le traitement avec l'extrait de l'exemple 1. Cette augmentation de 6,5 % du rendement correspond ainsi à un gain équivalent de 1,8 T /ha.

De la même façon, une tendance favorable du traitement de l'extrait de l'exemple 1 se dégage pour le poids moyen des fruits. Il permet d'obtenir des fruits d'un poids moyen supérieur avec un poids de 24,6 kg pour 100 fruits contre 23,6 kg pour le témoin.

Sur le plan qualitatif, le traitement avec l'extrait de l'exemple 1 donne également une valeur de fermeté du fruit plus élevée avec 8,2 kg en moyenne contre 8,0 kg pour le témoin.

Le niveau de nutrition des arbres en ce qui concerne l'azote semble influencé favorablement par l'application de l'extrait de l'exemple 1. L'effet du traitement paraît également favorable en ce qui concerne la teneur en azote, phosphore et potasse des fruits.

### F)-. Autres études

Des études complémentaires, dont les résultats ne sont pas reportés ici ont été réalisées sur d'autres variétés de maïs, de blé et de pois, ainsi que sur certaines variétés de soja, de ray-grass et de melons.

Ces différentes études ont confirmées les effets de l'extrait d'algue de l'exemple 1 riche en isopentényladénine, ainsi que les effets de plusieurs dérivés naturels ou de synthèse d'adénine et en particulier la transzéatine, la 6-zéatine riboside, la dihydrozéatine, l'isopentényladénine de synthèse, la N⁶-furfuryladénine et la N⁶-benzyladénine.

### Exemple 4 - Exemples de formulations incorporant un dérivé d'adénine naturel ou un extrait d'algue enrichi en un dérivé d'adénine.

D'une façon générale, la quantité de dérivés actifs d'adénine à utiliser dans le cadre des applications de l'invention sera de 0,1 mg à 1 g par hectare exprimé en activité BAP.

De préférence, cette quantité sera de 0,5 mg à 50 mg, et encore de préférence de 1 mg à 5 mg équivalent BAP par hectare.

On donnera ci-après à titre d'exemples, diverses formulations utilisables selon l'invention avec des indications sur les conditions de mise en oeuvre de ces formulations.

| A/ FORMULE ENGRAIS Mg | |
|---|---|
| Nitrate de Magnésium | 50% |
| Extrait végétal d'acides aminés | 20% |
| Extrait de l'exemple 1 | 1g eq BAP/ha |
| Eau | Qsp 100 |

| **Cultures** | **Nombre d'apports à différents stades de la campagne** | **Dose par apport** |
|---|---|---|
| Vergers | 3 - 6 | 8 l/ha |
| Cultures maraîchères | 2 - 6 | 5-8 l/ha |

| B/ FORMULE ENGRAIS Fe | |
|---|---|
| Chlorure ferrique | 25% |
| Extrait végétal d'acides aminés | 20% |
| Extrait de l'exemple 1 | 10 mg eq BAP/ha |
| Eau | Qsp 100 |

| **Cultures** | **Nombre de traitements** | **Dose par traitement** |
|---|---|---|
| Vergers | 4 - 6 | 3-6 I/ha |
| Cultures maraîchères | 4 - 6 | 3-6 I/ha |

| C/ ENGRAIS MnZn | |
|---|---|
| Nitrate de Manganèse | 31% |
| Nitrate de Zinc | 22% |
| Extrait végétal d'acides aminés | 10% |
| Extrait de l'exemple 1 | 5 mg eq BAP/ha |
| Eau | Qsp 100 |

| **Cultures** | **Nombre d'apports** | **Dose par apport** |
|---|---|---|
| Maïs | 1 - 2 | 4 - 8 l/ha |
| Lin | 1 - 2 | 4 - 8 l/ha |
| Betterave | 1 - 3 | 4 - 8 l/ha |
| Soja | 1 - 2 | 4 - 8 l/ha |
| Pomme de terre | 1 - 3 | 4 - 8 l/ha |
| Haricots pois | 2 - 3 | 4 - 8 l/ha |

| D/ ENGRAIS N Cu Na | |
|---|---|
| Urée | 32% |
| Nitrate de Cuivre | 3,3% |
| Nitrate de Cobalt | 0,24% |
| Chlorure de Sodium | 3,80 |
| Extrait végétal d'acides aminés | 10% |
| Extrait de l'exemple 1 | 2 mg eq BAP/ha |
| Eau | Qsp 100 |

| **Cultures** | **Nombre d'apports** | **Dose par apport** |
|---|---|---|
| Prairies Cultures fourragères | 1 - 4 | 4 - 6 l/ha |

| E/ FORMULE ENGRAIS N P K Oligoéléments | |
|---|---|
| Urée | 17% |
| Acide phosphorique | 9% |
| Potasse | 9% |
| Nitrate de Manganèse | 0,7 |
| Nitrate de Zinc | 0,3 |
| Nitrate de Cuivre | 0,10 |
| Chlorure ferrique | 0,20 |
| Acide borique | 0,4 |
| Extrait végétal d'acides aminés | 10% |
| Extrait de l'exemple 1 | Qsp 0,1mg eq BAP/ha |
| Eau | Qsp 100 |

| **Cultures** | **Nombre d'apports** | **Dose par apport** |
|---|---|---|
| Cultures maraîchères | 5 - 10 | 4 - 6 l/ha |
| Vergers | 4 - 6 | 4 - 6 l/ha |

| F/ FORMULE ENGRAIS B P K | |
|---|---|
| Potasse | 8% |
| Acide phosphorique | 1 |
| Acide borique | 1 |
| Extrait végétal d'acides aminés | 15% |
| Extrait de l'exemple 1 | 1 mg eq BAP/ha |
| Eau | Qsp 100 |

| **Cultures** | **Nombre d'apports** | **Dose par apport** |
|---|---|---|
| Culture maraîchères | 2 - 4 | 3 - 5 l/ha |
| Cultures fruitières | 3 | 5 l/ha |

## Revendications

1. Utilisation de dérivés naturels ou synthétiques d'adénine ou d'extraits d'algues riches en de tels dérivés comme agents foliaires destinés à favoriser par systémie la migration et la distribution des éléments nutritifs ou fertilisants azotés et/ou riches en oligo-éléments ainsi que des éléments nutritifs ou fertilisants sous forme brute, chez la plante.

2. Utilisation selon la revendication 1, **caractérisée en ce que** les dérivés précités sont substitués sur l'atome d'azote en position 6 de l'adénine et éventuellement sur le carbone en position 2 et/ou sur l'atome d'azote en position 9 de l'adénine, notamment par un groupement D-ribofuranosyl.

3. Utilisation selon la revendication 1 ou 2, **caractérisée en ce que** les dérivés d'adénine précités sont naturels et sont choisis dans le groupe comprenant la transzéatine, la cis-zéatine riboside; la dihydrozéatine, l'isopentényladénine et leurs ribosides.

4. Utilisation selon la revendication 1 ou 2, **caractérisée en ce que** les dérivés précités sont synthétiques et sont choisis dans le groupe comprenant l'isopentényladénine de synthèse, la N⁶-furfuryladénine et la N⁶-benzyladénine.

5. Utilisation selon la revendication 1 ou 2 d'un extrait d'algues enrichi en dérivés d'adénine, **caractérisée en ce que** cet extrait est obtenu par un procédé comportant les étapes suivantes : lavage, broyage, extraction, et éventuellement concentration.

6. Utilisation selon la revendication 5, **caractérisée en ce que** les algues permettant d'obtenir les extraits précités enrichis en dérivés d'adénine sont choisies dans le groupe comprenant Ascophyllum nodosum, Fucus vésiculosus, Fucus serratus.

7. Utilisation selon la revendication 5 ou 6, **caractérisée en ce que** l'étape d'extraction précitée est réalisée en milieu acide, à une température d'environ 90 à 110°C pendant 30 min à 1 h sous agitation, poursuivie à température ambiante pendant une période d'environ 24 à 48 h.

8. Utilisation selon l'une des revendications 5 à 7, **caractérisée en ce que** l'extrait d'algues précité est enrichi en isopentényladénine ou en isopentényladénosine.

9. Utilisation selon l'une quelconque des revendications 1 à 8, pour la fabrication d'une composition comprenant une quantité de dérivés d'adénine ou d'extraits d'algues enrichis en de tels dérivés permettant l'obtention d'une activité comprise entre 500 et 5 000 exprimée en microgrammes équivalents BAP (6-benzyladénine).

10. Utilisation selon l'une quelconque des revendications 1 à 9, **caractérisée en ce que** les dérivés d'adénine, ou les extraits d'algues riches en de tels dérivés précités, sont associés à un engrais foliaire.

11. Utilisation selon l'une quelconque des revendications 1 à 10 pour le traitement de plantes, **caractérisée en ce que** la quantité de dérivés d'adénine ou d'extraits d'algues riches en de tels dérivés appliquée auxdites plantes est de 0,1 mg à 1 g, de préférence 0,5 mg à 50 mg, et encore de préférence de 1 mg à 5 mg équivalent BAP par hectare.

12. Composition à usage agricole, **caractérisée en ce qu'**elle comprend un engrais foliaire en association avec une quantité efficace d'un extrait d'algues riche en un dérivé d'adénine notamment choisi dans le groupe comprenant l'isopentényladénine et l'isopentényladénosine.

13. Composition selon la revendication 12, **caractérisée en ce que** le dérivé d'adénine ou l'extrait d'algues précité est présent en une quantité permettant l'obtention d'une activité comprise entre 500 et 5000 exprimée en µg équivalent BAP (6-benzyladénine).

## Claims

1. Use of natural or synthetic adenine derivatives or algal extracts rich in such derivatives as foliar agents for systemically enhancing the migration and distribution of nutrients or fertilizing components which contain nitrogen and/or are rich in trace elements, as well as nutrients or fertilizing components in the crude form, in plants.

2. Use according to claim 1, **characterized in that** the above-mentioned derivatives are substituted on the nitrogen atom in the 6-position of the adenine and optionally on the carbon in the 2-position and/or on the nitrogen atom in the 9-position of the adenine, especially by a D-ribofuranosyl group.

3. Use according to claim 1 or 2, **characterized in that** the above-mentioned adenine derivatives are natural and are selected from the group comprising transzeatin, cis-zeatin riboside, dihydrozeatin, isopentenyladenine and their ribosides.

4. Use according to claim 1 or 2, **characterized in that** the above-mentioned derivatives are synthetic and are selected from the group comprising synthetic isopentenyladenine, N⁶-furfuryladenine and N⁶-benzyladenine.

5. Use according to claim 1 or 2 of an algal extract enriched in adenine derivatives, **characterized in that** this extract is obtained by a process comprising the following steps: washing, grinding, extraction and optionally concentration.

6. Use according to claim 5, **characterized in that** the algae from which the above-mentioned extracts enriched in adenine derivatives can be obtained are selected from the group comprising Ascophyllum nodosum, Fucus vesiculosus and Fucus serratus.

7. Use according to claim 5 or 6, **characterized in that** the above-mentioned extraction step is performed in an acid medium at a temperature of about 90 to 110°C for 30 min to 1 h, with agitation, and then at room temperature for a period of about 24 to 48 h.

8. Use according to one of claims 5 to 7, **characterized in that** the above-mentioned algal extract is enriched in isopentenyladenine or isopentenyladenosine.

9. Use according to any one of claims 1 to 8 for the manufacture of a composition comprising adenine derivatives or algal extracts enriched in such derivatives in an amount which affords an activity of between 500 and 5000, expressed in microgram equivalents of BAP (6-benzyladenine).

10. Use according to any one of claims 1 to 9, **characterized in that** the above-mentioned adenine derivatives or algal extracts rich in such derivatives are associated with a foliar fertilizer.

11. Use according to any one of claims 1 to 10 for the treatment of plants, **characterized in that** the amount of adenine derivatives or algal extracts rich in such derivatives which is applied to said plants is 0.1 mg to 1 g, preferably 0.5 mg to 50 mg and particularly preferably 1 mg to 5 mg equivalents of BAP per hectare.

12. Composition for agricultural use, **characterized in that** it comprises a foliar fertilizer in association with an effective amount of an algal extract rich in an adenine derivative selected especially from the group comprising isopentenyladenine and isopentenyladenosine.

13. Composition according to claim 12, **characterized in that** the above-mentioned adenine derivative or algal extract is present in an amount which affords an activity of between 500 and 5000, expressed in µg equivalents of BAP (6-benzyladenine).

## Patentansprüche

1. Verwendung von natürlichen oder synthetischen Adenin-Derivaten oder von Algenextrakten, die reich an solchen Derivaten sind, als Blattbehandlungsmittel, die dazu bestimmt sind, die systemische Wanderung und Verteilung von stickstoffhaltigen und/oder an Oligoelementen reichen Nährstoffen oder Düngemitteln sowie von Nährstoffen oder Düngemitteln in roher Form bei der Pflanze zu fördern.

2. Verwendung nach Anspruch 1, **dadurch gekennzeichnet, dass** die genannten Derivate an dem Stickstoffatom in der 6-Position des Adenins und gegebenenfalls an dem Kohlenstoffatom in der 2-Position und/oder an dem Stickstoffatom in der 9-Position des Adenins, insbesondere durch eine D-Ribofuranosyl-Gruppe, substituiert sind.

3. Verwendung nach Anspruch 1 oder 2, **dadurch gekennzeichnet, dass** die genannten Adenin-Derivate natürliche Adenin-Derivate sind und ausgewählt werden aus der Gruppe, die trans-Zeatin, cis-Zeatinribosid; Dihydrozeatin, Isopentenyladenin und ihre Riboside umfasst.

4. Verwendung nach Anspruch 1 oder 2, **dadurch gekennzeichnet, dass** die genannten Derivate synthetische Derivate sind und ausgewählt werden aus der Gruppe, die Synthese-lsopentenyladenin, N⁶-Furfuryladenin und N⁶-Benzyladenin umfasst.

5. Verwendung nach Anspruch 1 oder 2 eines an Adenin-Derivaten angereicherten Algenextrakts, **dadurch gekennzeichnet, dass** dieser Extrakt durch ein Verfahren hergestellt wurde, das die folgenden Stufen umfasst: Waschen, Mahlen, Extrahieren und gegebenenfalls Einengen.

6. Verwendung nach Anspruch 5, **dadurch gekennzeichnet, dass** die Algen, welche die Herstellung der genannten, an Adenin-Derivaten angereicherten Extrakte erlauben, ausgewählt werden aus der Gruppe, die umfasst Ascophyllum nodosum, Fucus vesiculosus und Fucus serratus.

7. Verwendung nach Anspruch 5 oder 6, **dadurch gekennzeichnet, dass** die genannte Extraktionsstufe in einem sauren Medium bei einer Temperatur von etwa 90 bis 110°C 30 min bis 1 h lang unter Rühren durchgeführt und bei Umgebungstemperatur für eine Zeitspanne von etwa 24 bis 48 h fortgesetzt wird.

8. Verwendung nach einem der Ansprüche 5 bis 7, **dadurch gekennzeichnet, dass** der genannte Algenextrakt an Isopentenyladenin oder an Isopentenyladenosin angereichert ist.

9. Verwendung nach einem der Ansprüche 1 bis 8 zur Herstellung einer Zusammensetzung, die eine solche Menge an Adenin-Derivaten oder an Algenextrakten, die an solchen Derivaten angereichert sind, umfasst, welche die Erzielung einer Aktivität zwischen 500 und 5000, ausgedrückt in µg-Äquivalenten BAP (6-Benzyladenin),erlaubt.

10. Verwendung nach einem der Ansprüche 1 bis 9, **dadurch gekennzeichnet, dass** die genannten Adenin-Derivate oder die genannten, an solchen Derivaten angereicherten Algen-Extrakte mit einem Blattdünger kombiniert sind.

11. Verwendung nach einem der Ansprüche 1 bis 10 zur Behandlung von Pflanzen, **dadurch gekennzeichnet, dass** die auf die genannten Pflanzen aufgebrachte Menge an Adenin-Derivaten oder an Algenextrakten, die reich an solchen Derivaten sind, 0,1 mg bis 1 g, vorzugsweise 0,5 bis 50 mg und besonders bevorzugt 1 bis 5 mg-Äquivalente BAP pro Hektar beträgt.

12. Zusammensetzung für die Verwendung in der Landwirtschaft, **dadurch gekennzeichnet, dass** sie einen Blattdünger in Kombination mit einer wirksamen Menge eines Algenextrakts umfasst, der reich an einem Adenin-Derivat ist, das insbesondere ausgewählt wird aus der Gruppe Isopentenyladenin und Isopentenyladenosin.

13. Zusammensetzung nach Anspruch 12, **dadurch gekennzeichnet, dass** das genannte Adenin-Derivat oder der genannte Algenextrakt in einer Menge vorliegt, welche die Erzielung einer Aktivität zwischen 500 und 5000, ausgedrückt in µg-Äquivalenten BAP (6-Benzyladenin), erlaubt.
